# EUROPÄISCHE PATENTSCHRIFT

(11) **EP 0 641 621 B1**
(45) Veröffentlichungstag und Bekanntmachung des Hinweises auf die Patenterteilung: **08.10.1997**
(21) Anmeldenummer: 94810495.5
(22) Anmeldetag: 31.08.1994
(51) Int. Cl.: B23H 7/26

(54) **Drehantriebsvorrichtung**
Rotary drive device
Dispositif d'entraînement rotatif

(30) Priorität: 08.09.1993 DE 4330313
(43) Veröffentlichungstag der Anmeldung: 08.03.1995
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 286 585
- FR-A- 2 520 828
- US-A- 1 648 715
- SOVIET ENGINEERING RESEARCH. (STANKI I INSTRUMENTY & VESTNIK MASHINOSTROENIA MASHINOSTROCNIE), Bd.11, Nr.5, 1991, NEW YORK US Seiten 29 - 31, XP000257481 YU. A. VIL'CHINSKII 'Design layouts of closed geartrains in the kinematics of industrial robots'

## Beschreibung

Die vorliegende Erfindung bezieht sich auf eine Drehantriebsvorrichtung für die Pinole oder die Werkstückaufnahme einer Erodiermaschine nach dem Oberbegriff des Patentanspruchs 1.

Solche Maschinen ermöglichen bekanntlich ein äusserst präzises Bearbeiten von Werkstücken durch elektroerosiven Materialabtrag. Um eine präzise Formgebung eines Werkstückes zu erreichen, müssen die Teile und Elemente der Erodiermaschine mit mindestens der gleich hohen, möglichst mit einer noch höheren Präzision gefertigt sein und arbeiten.

Im Fall einer Senkerodiermaschine wird eine Elektrode verwendet, um das Werkstück zu bearbeiten, die in der Pinole der Maschine höhenverstellbar und verdrehbar gehalten ist. Zur Verdrehung der Pinole und damit der Elektrode ist ein Drehantrieb vorgesehen, der üblicherweise elektromotorisch betätigt ist. Um die Pinole in eine gewünschte Winkelausrichtung zu bringen, wird die Pinole von einem Elektromotor über ein Untersetzungsgetriebe in Drehung versetzt. Die exakte Winkelposition der Pinole wird dabei von einem Drehgeber erfasst, der an ein Steuergerät zur Drehsteuerung der Pinole angeschlossen ist.

Bei bekannten, derartigen Drehantriebsvorrichtungen ist das Übertragungsspiel zwischen Motorwelle, Getriebe und Pinole eines der Hauptprobleme. Man war daher gezwungen, äusserst präzise gefertigte Untersetzungsgetriebe und Kraftübertragungselemente zu verwenden, um die geforderte Drehwinkel-Positioniergenauigkeit der Pinole erreichen zu können. Derartige Antriebe sind aber sehr teuer, bedingen eine aufwendige Wartung und unterliegen einem verhältnismässig raschen Verschleiss, der die erreichbare Genauigkeit beeinträchtigt. Entsprechendes gilt für Drehantriebe, die die Werkstückaufnahme zu verdrehen gestatten.

Um diese Probleme zu lösen, wird in der DE-PS 37 11 819 eine Drehantriebsvorrichtung vorgeschlagen, die zwei bezüglich der Drehrichtung umsteuerbare Elektromotoren und je ein jedem Elektromotor zugeordnetes Reduktionsgetriebe aufweist. Das Reduktionsgetriebe umfasst ein mit dem Elektromotor gekoppeltes und von diesem angetriebenes Eingangsglied sowie ein mit der Pinole gekoppeltes und jene antreibendes Ausgangsglied. Ferner ist ein mit der Pinole gekoppelter Drehgeber sowie ein mit dem Drehgeber und den Elektromotoren verbundenes Steuergerät vorgesehen, welches die beiden Elektromotoren betrags- und/oder richtungsmässig stets ungleich antreibt.

Dadurch wird der eigentliche Antriebsstrang, nämlich das Untersetzungsgetriebe sowie die zugeordneten Kraftübertragungsteile, stets unter einer gewissen Vorspannung gehalten, welche jegliches Spiel im Getriebe und zwischen den Zahnrädern sowie die in jedem mechanischen System immer vorhandene Elastizität unwirksam macht.

Diese Drehantriebsvorrichtung hat sich zwar hervorragend bewährt und gestattet eine ultrapräzise Drehsteuerung der Pinole, doch ist der Aufwand sowohl in baulicher Hinsicht (zwei Motoren, Doppel-Getriebe) als auch in steuerungstechnischer Hinsicht recht hoch, was sich auf den Preis auswirkt. In vielen Fällen wäre es wünschenswert, über eine zwar hochpräzise, doch preisgünstigere Drehantriebssteuerung verfügen zu können.

Es ist demnach die Aufgabe der Erfindung, eine Drehantriebsvorrichtung der gattungsgemässen Art so auszubilden, dass sie wesentlich einfacher im Aufbau und damit kostengünstig herzustellen ist, trotzdem aber, auch bei Verzicht auf hochpräzis gefertigte Kraftübertragungselemente, eine äusserst genaue Drehpositionierung der Pinole oder Werkzeugaufnahme bei gleichzeitiger Unempfindlichkeit gegen Verschleiss zu gewährleisten vermag, all dies bei einem ausgesprochen kompakten, platzsparendem Aufbau.

Gemäss der Erfindung wird diese bei einer Drehantriebsvorrichtung der gattungsgemässen Art durch die im Patentanspruch 1 angegebenen Merkmale gelöst.

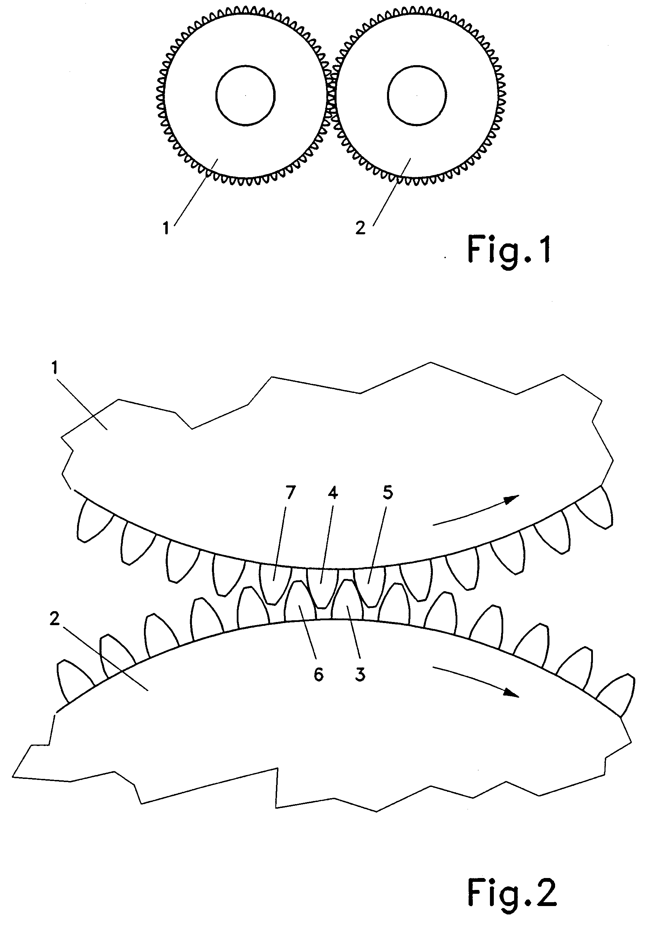

Die Erfindung geht von der Tatsache aus, dass bei zwei Zahnrädern 1 und 2, die miteinander kämmen, wie es in Fig. 1 und 2 stark vereinfacht und schematisch dargestellt ist, stets ein mehr oder minder grosses Spiel zwischen den im Eingriff stehenden Zahnflanken besteht. In der stark vergrösserten, schematischen Teilansicht gemäss Fig. 2 ist deutlich zu erkennen, dass bei antreibendem Zahnrad 2, das sich in Pfeilrichtung dreht, zwischen den Flanken des Zahns 3 von Zahnrad 2 und des Zahns 4 von Zahnrad 1 sowie zwischen den Flanken des Zahns 6 von Zahnrad 2 und des Zahns 7 von Zahnrad 1 ein (hier übertrieben dargestelltes) Spiel vorhanden ist, währenddem die voreilende Flanke des Zahns 3 von Zahnrad 2 und die nacheilende Flanke des Zahns 5 von Zahnrad 1 sowie die voreilende Flanke des Zahns 6 von Zahnrad 2 und die nacheilende Flanke des Zahns 4 von Zahnrad 1 aneinander aufliegen. Bei Umkehrung der Drehrichtung des antreibenden Zahnrads 2 macht sich dieses Spiel unangenehm bemerkbar. Diesen nachteiligen Effekt soll die Erfindung mit einfachen Mitteln verhindern.

In den abhängigen Ansprüchen 2 bis 4 sind Weiterbildungen des Erfindungsgegenstandes und bevorzugte Ausführungsformen umschrieben.

In der DE-OS 38 09 577 ist zwar ein mechanisches Getriebe offenbart, das selbstnachstellend und spielfrei sein soll. Dieses Getriebe ist aber sehr kompliziert doppelt aufgebaut, wobei in der einen Getriebekette ein vorgespanntes Torsionsfederelement vorhanden ist. Eine solche Lösung ist sehr aufwendig und teuer. In der DE-OS 32 25 950 wird ein Planetengetriebe mit zwei Mittelrädern offenbart, welche sich geringfügig in der Zähnezahl unterscheiden. Eine solche Lösung hat offensichtlich mit dem Erfindungsgedanken nichts zu tun. Die DE-OS 38 25 136 offenbart ein Zahnradgetriebe mit einem Riementrieb, welcher unter Einwirkung einer Spannrolle steht. Dadurch, dass der Riementrieb auf zwei achsparallel zueinander angeordnete Zahnräder einwirkt, soll eine völlige Spielfreiheit erreicht werden. Vom Aufbau her ist diese Lösung nicht nur sehr voluminös, sondern auch aufwendig und teuer.

In der FR-A-2 520 828 schliesslich ist ein spielfreies Untersetzungsgetriebe offenbart, welches zwei mit Hilfe von Federkraft gegeneinander verspannte, koaxiale Zahnräder aufweist, die mit einem gemeinsamen Ritzel kämmen. Dieses Getriebe ist jedoch, infolge der unabhängigen Lagerung der beiden gegeneinander verspannten Zahnräder, recht kompliziert und vor allem voluminös aufgebaut. Ausserdem ist diesem Dokument kein Hinweis zu entnehmen, eine solche Konstruktion bei der Drehantriebsvorrichtung für die Pinole einer Erodiermaschine zu verwenden.

Im folgenden wird ein Ausführungsbeispiel einer erfindungsgemässen Drehantriebsvorrichtung, unter Bezugnahme auf die beiliegenden Zeichnungen, näher erläutert. Dabei zeigen:
- Fig. 1 und 2: schematische Ansichten eines Zahnradpaars,
- Fig. 3: einen Axialschnitt durch eine Drehantriebsvorrichtung,
- Fig. 4: eine Ansicht von oben auf das drehfest mit der Pinole zu verbindende, erste Zahnrad; und
- Fig. 5: eine Ansicht von unten auf das mit dem ersten Zahnrad verbundene, zweite Zahnrad.

Die Fig. 1 und 2 wurden bereits vorstehend erläutert, so dass darauf nicht mehr eingegangen werden muss.

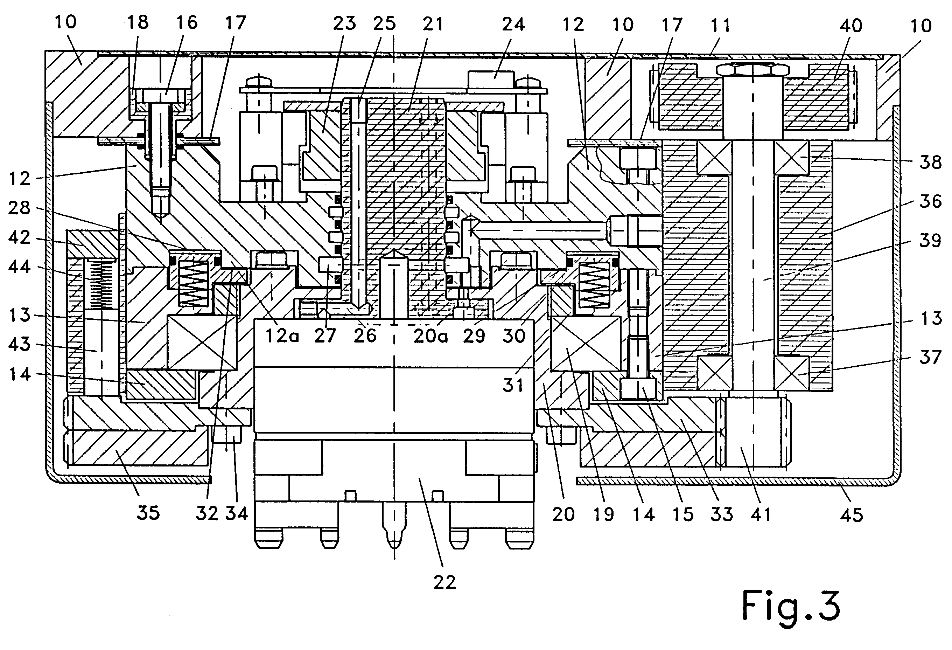

In der Fig. 3 ist ein Ausführungsbeispiel der Drehantriebsvorrichtung in einem Axialschnitt dargestellt. Diese weist eine obere Flanschplatte 10 auf, welche durch ein Deckplatte 11 abgedeckt ist. An der Flanschplatte 10 ist ein mehrteiliger Rahmen befestigt, umfassend einen oberen Rahmenteil 12, ein Lagergehäuse 13 und eine untere Flanschplatte 14. Diese drei Rahmenteile 12, 13 und 14 sind miteinander verschraubt (Schrauben 15) und der so gebildete Rahmen seinerseits ist mit der Flanschplatte 10 verschraubt (Schrauben 16). Der durch die Teile 12, 13 und 14 gebildete Rahmen muss gegenüber der oberen Flanschplatte 10 elektrisch isoliert sein; dazu dienen Isolierscheiben 17 und Isolierhülsen 18, die zwischen dem oberen Rahmenteil 12 und der oberen Flanschplatte 10 eingefügt sind.

Der mittlere Rahmenteil, das Lagergehäuse 13, nimmt ein Präzisions-Lager 19 auf, vorzugsweise ein Präzisions-Kugellager. Dieses wird durch die untere Flanschplatte 14 im Lagergehäuse 13 gehalten und gegen axiale Verschiebung gesichert. Das Lager 19 dient zur Führung einer Nabe 20, an welcher eine zentrale Welle 21 befestigt ist. Durch das Lager 19 ist die Nabe 20 und damit die Welle 21 drehbar gelagert. Am unteren Ende der Welle 21 ist eine schematisch angedeutete Spannvorrichtung 22 befestigt, die z.B. in einer Senkerodiermaschine zur Aufnahme der (hier nicht dargestellten) Erodier-Elektrode dient. Das obere Ende der Welle 21 trägt einen Drehgeber 23, der zusammen mit einem Sensor 24 ein Winkelmess-System bildet, welches die benötigten Winkellage-Informationen an das gemeinsame Steuergerät liefert.

Die Welle 21 ist mit axialen bzw. achsparallelen sowie radialen Kanälen 25, 26 ausgerüstet, die hier nicht im einzelnen dargestellt sind und die mit Ringkanälen 27 zusammenarbeiten, durch die z.B. Spülflüssigkeit, Pressluft zur Betätigung der Spannvorrichtung 22 und dgl. eingeleitet werden können. Auf die genaue Ausbildung dieser Kanäle wird hier nicht näher eingegangen, da dies mit dem Erfindungsgedanken nichts zu tun hat.

Der obere Rahmenteil 12 ist mit einer kreisringförmigen Nut 28 zur Aufnahme eines Ringkolbens 29 versehen, welch letzterer einen radial gegen innen abstehenden, kreisringförmigen Fortsatz 30 aufweist. Die Nabe 20 ist an ihrer oberen Stirnfläche mit einer Bremsscheibe 32 versehen, die mit Schrauben 20a an der Nabe 20 befestigt ist und die sich in den Raum zwischen einer Quetschkante 12a des oberen Rahmenteils 12 und der Oberfläche des Fortsatzes 30 erstreckt. Der Kolben 29 wird von Federn 31 gegen die Quetschkante 12a gedrückt und klemmt dabei die Bremsscheibe 32 ein: Die Bremse ist unter Wirkung der Federn 31 betätigt. Wenn der Ringkolben 29 mit Druckmittel beaufschlagt wird, - die Kanäle zur Druckmittelzufuhr in den Raum oberhalb des Ringkolbens 29 sind aus dieser Darstellung nicht ersichtlich -, wird der Fortsatz 30 gegen unten bewegt und damit die Bremskraft aufgehoben. Damit ist eine Scheibenbremse gebildet, um die Nabe 20 und damit die Spannvorrichtung 22 in der gewünschten Lage zu fixieren.

Die untere Stirnfläche der Nabe 20 trägt ein erstes Zahnrad 33, welches mittels Schrauben 34 drehfest an der Nabe 20 verankert ist. An diesem ersten Zahnrad 33 ist ein zweites Zahnrad 35 koaxial dazu und relativ zu diesem drehbeweglich befestigt. Auf die nähere Ausbildung dieser beiden Zahnräder 33 und 35 wird im folgenden noch näher eingegangen werden.

Seitlich am durch die Teile 12, 13 und 14 gebildeten Rahmen ist ein Lagerbock 36 befestigt, welcher eine in zwei Lagern 37 und 38 drehbar gelagerte Welle 39 aufnimmt. Das obere Ende der Welle 39 trägt ein Pulley 40, das über einen (nicht dargestellten) Zahnriemen von einem Elektromotor, in dieser Darstellung ebenfalls nicht ersichtlich, angetrieben wird. Das Untersetzungsverhältnis kann dabei etwa 3:1 betragen. Das untere Ende der Welle 39 trägt ein Ritzel 41, welches mit den beiden koaxial angeordneten Zahnrädern 33 und 35 kämmt. Das Untersetzungsverhältnis zwischen Ritzel 41 und Zahnrädern 33, 35 kann hier mit etwa 10:1 gewählt werden.

Zur Übertragung des Erodierstroms vom feststehenden Teil der Drehantriebsvorrichtung auf den rotierenden Teil sind seitlich am durch die Teile 12, 13 und 14 gebildeten Rahmen Bürstengehäuse 42 angebracht, die zur Aufnahme je eines Kohlebürstenpaares 43 dienen. Letztere werden unter Wirkung von Federn 44 gegen die Oberfläche des ersten Zahnrads 33 gepresst. In der Darstellung gemäss Fig. 3 ist nur ein Bürstengehäuse 42 zu sehen, doch sind zweckmässigerweise mehrere, über den Umfang des Rahmens verteilte Bürstengehäuse 42 vorgesehen. Die gesamte Anordnung ist schliesslich von einem Gehäuse 45 umgeben, das unten einen Ausschnitt für die Spannvorrichtung besitzt.

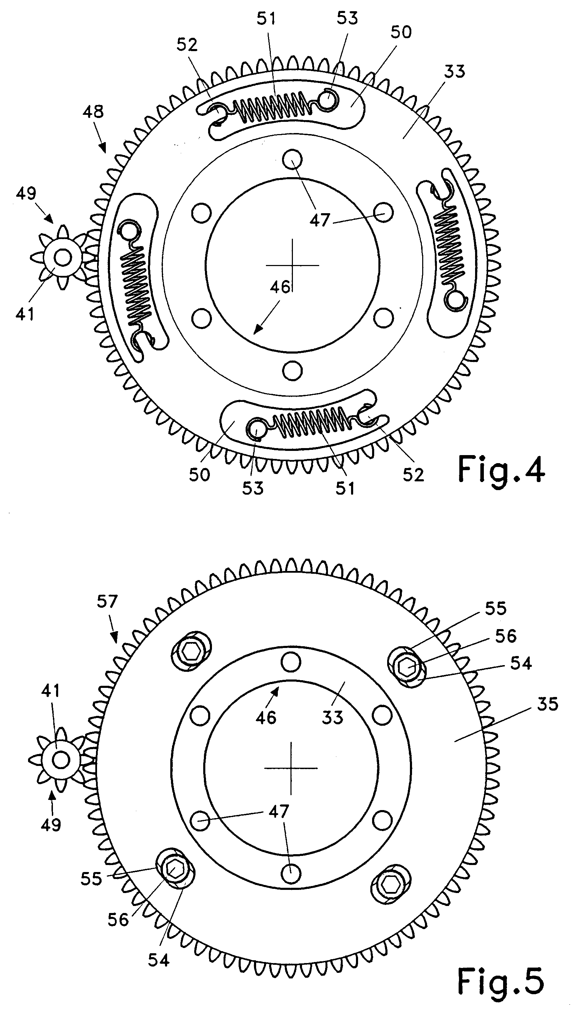

In den Fig. 4 und 5 sind die beiden Zahnräder 33 und 35 in aus der Drehantriebsvorrichtung ausgebautem Zustand dargestellt. Das Ritzel 41 ist jeweils nur zur Verdeutlichung hinzugefügt. Fig. 4 ist eine Ansicht von oben auf das erste Zahnrad 33, während Fig. 5 eine Ansicht von unten auf das zweite Zahnrad 35 zeigt.

Das erste Zahnrad besitzt eine zentrale Bohrung 46, deren Durchmesser etwas grösser ist als der Durchmesser bzw. die grösste seitliche Dimension des Spannfutters 22, da es dieses in eingebautem Zustand umgreift, wie aus Fig. 3 deutlich zu sehen ist. Die um die Bohrung 46 herum verteilten Löcher 47 dienen zur Aufnahme der Schrauben 34 zur Befestigung des Zahnrads 33 am Flansch 20. Entlang seiner Peripherie ist das Zahnrad 33 mit einer Verzahnung 48 ausgestattet, die in die Verzahnung 49 des Ritzels 41 einzugreifen bestimmt ist.

Über seinen Umfang verteilt besitzt das Zahnrad 33 längliche Schlitze 50, die zur Aufnahme von Zugfedern 51 dienen. Am einen Ende der Schlitze 50 sind hakenartige Verankerungen 52 angebracht oder angeformt, an welchen das eine Ende der Zugfedern 51 befestigt ist. Das andere Ende der Zugfedern 51 ist jeweils an einem Bolzen 53 eingehängt; diese Bolzen 53 stehen senkrecht von der dem Zahnrad 33 zugewandten Oberfläche des Zahnrads 35 ab und ragen in die Schlitze 50 hinein.

Das zweite Zahnrad 35 ist in koaxialer Lage zum ersten Zahnrad 33 an diesem befestigt, und zwar so, dass es gegenüber dem ersten Zahnrad 33 um ein geringes Mass verdrehbar ist. Dazu weist das zweite Zahnrad 35 vier Langlöcher 54 auf, die mit gegenüber der Oberfläche des Zahnrads 35 zurückversetzten Schultern 55 versehen sind, die sich beidseitig des Langlochs 54 in Umfangsrichtung erstrecken. In die Langlöcher 54 eingesetzt sind selbstsichernde Schrauben 56, deren Schraubenkopf auf den Schultern 55 aufliegt und die in entsprechende Gewindebohrungen im ersten Zahnrad 33 eingeschraubt sind. Es versteht sich, dass die Schrauben 56 nicht festgezogen, sondern nur so weit eingedreht sind, dass sich das zweite Zahnrad 35 relativ zum ersten Zahnrad 33 verdrehen kann. Diese Drehbewegung ist durch die Abmessung der Langlöcher 54 begrenzt.

Das zweite Zahnrad 35 ist mit einer peripheren Verzahnung 57 versehen, die exakt der Verzahnung 48 des ersten Zahnrads 33 entspricht und die ebenfalls in die Verzahnung 49 des Ritzels 41 eingreift.

Durch die tangential wirkende Zugkraft der Federn 51, die einerseits am Zahnrad 33 und andererseits am Zahnrad 35 angreifen, haben diese beiden Zahnräder das Bestreben, sich gegeneinander zu verdrehen. Dadurch, dass beide Zahnräder 33 und 35 in dasselbe Ritzel 41 eingreifen, ist eine solche gegensinnige Verdrehung gar nicht oder nur in einem sehr kleinen Mass möglich, nämlich soweit, bis allfälliges Zahnflankenspiel zwischen den Verzahnung 48 bzw. 57 der Zahnräder 33 bzw. 35 einerseits und der Verzahnung 49 des Ritzels 41 ausgeglichen ist.

Die Zugkraft der Federn 51 ist so bemessen, dass das derart erzeugte Vorspann-Drehmoment grösser ist als das grösste von der Drehantriebsvorrichtung aufzubringende bzw. zu übertragende Drehmoment. Andererseits soll die Zugkraft der Federn auch nicht übermässig gross gewählt werden, um nicht die Reibung zwischen den Zahnrädern 33 und 35 einerseits und dem Ritzel 41 andererseits unnötig zu erhöhen bzw. einem vorzeitigen Verschleiss Vorschub zu leisten. In Anbetracht der Tatsache, dass bei einer Drehantriebsvorrichtung für die Pinole einer Erodiermaschine nur sehr geringe Drehmomentwerte zu übertragen sind, ist das Problem der Wahl der passenden Federkraft einfach zu lösen.

Bei der erfindungsgemässen Drehantriebsvorrichtung sind die beiden Zahnräder 33 und 35 stets gegeneinander verspannt, so dass in jedem Fall, in beiden Drehrichtungen, die zahnradseitigen Zahnflanken stets an den ritzelseitigen Zahnflanken anliegen. In der einen Drehrichtung wird das Drehmoment vom Ritzel 41 direkt via drehfest montiertem Zahnrad 33 auf die Pinole der Erodiermaschine übertragen; in der anderen Drehrichtung erfolgt die Drehmomentübertragung vom Ritzel 41 über das zweite Zahnrad 35 und über die Federn 51 auf die Pinole.

Sollte im Lauf der Betriebszeit Verschleiss an den Verzahnungen auftreten, spielt dies für die Funktionstüchtigkeit und die Genauigkeit der Lageeinstellung absolut keine Rolle, da allfällig vergrössertes Spiel unter Wirkung der Federn 51 selbsttätig ausgeglichen wird.

Mit der erfindungsgemässen Drehantriebsvorrichtung ist ein Drehantrieb für die Pinolen von Elektroerodier-Maschinen geschaffen, der sich aber auch für zahlreiche andere Anwendungsgebiete eignet, in denen eine spielfreie, hochpräzise Übertragung von Drehbewegungen erforderlich ist. Die erfindungsgemässe Vorrichtung ist sehr einfach im Aufbau, deshalb kostengünstig herzustellen, kompakt in den Abmessungen und stellt steuerungstechnisch geringere Anforderungen als eine Lösung mit zwei gegensinnig angetriebenen Elektromotoren.

## Patentansprüche

1. Drehantriebsvorrichtung für die Pinole (20, 21) oder die Werkstückaufnahme (22) einer Erodiermaschine, mit einem bezüglich der Drehrichtung umsteuerbaren Elektromotor, mit einem dem Elektromotor zugeordneten Reduktionsgetriebe, das ein mit dem Elektromotor gekoppeltes und von diesem angetriebenes Eingangsglied sowie ein mit der Pinole oder der Werkstückaufnahme gekoppeltes und jene antreibendes Ausgangsglied aufweist, mit einem mit der Pinole oder der Werkstückaufnahme gekoppelten Drehgeber (23) sowie mit einem mit dem Drehgeber und dem Elektromotor verbundenen Steuergerät, dadurch gekennzeichnet, dass das Eingangsglied des Reduktionsgetriebes ein Ritzel (41) und das Ausgangsglied des Reduktionsgetriebes zwei relativ zueinander verdrehbar gelagerte Zahnräder (33, 35) umfasst, welche beide mit dem Ritzel (41) in Eingriff stehen, wobei ein erstes (33) der beiden Zahnräder des Reduktionsgetriebes drehfest mit der Pinole (20, 21) oder Werkstückaufnahme (22) gekoppelt ist, während das zweite Zahnrad (35) gegenüber der Pinole oder Werkstückaufnahme verdrehbar am ersten Zahnrad gelagert ist und unter der Wirkung mindestens einer eine Torsions-Vorspannkraft ausübenden Zugfeder (51) steht, die in einem Schlitz (50) des einen Zahnrads (33), der in Umfangsrichtung desselben verläuft, angeordnet ist, und wobei das von der bzw. den Feder(n) (51) ausgeübte Vorspann-Drehmoment grösser ist als das grösste von der Drehantriebsvorrichtung zu übertragende Drehmoment.

2. Drehantriebsvorrichtung nach Anspruch 1, dadurch gekennzeichnet, dass die Drehbewegung des zweiten Zahnrads (35) drehwinkelmässig begrenzt ist.

3. Drehantriebsvorrichtung nach Anspruch 1, dadurch gekennzeichnet, dass beide Zahnräder (33, 35) mit in den Schlitz (50) hineinragenden Verankerungsorganen (52, 53) zum Einhängen einer Zugfeder (51) versehen sind, wobei das Verankerungsorgan (52) des einen Zahnrads (33) am einen Ende des Schlitzes (50) und das Verankerungsorgan (53) des anderen Zahnrads (35) im Bereich des anderen Endes des Schlitzes (50) angeordnet sind.

4. Drehantriebsvorrichtung nach einen der Ansprüche 1-3, dadurch gekennzeichnet, dass vier gleichmässig über den Umfang verteilte Schlitze (50) mit zugeordneten Zugfedern (51) vorgesehen sind.

## Claims

1. Rotary drive device for the centre sleeve (20, 21) or the workpiece holder (22) of an erosion machine, with an electric motor of reversible direction of rotation, with a reduction gear which is assigned to the electric motor and which has an input member, coupled to the electric motor and driven by this, and an output member, coupled to the centre sleeve or the workpiece holder and driving it, with a rotary encoder (23) coupled to the centre sleeve or the workpiece holder and with a control unit connected to the rotary encoder and the electric motor, characterized in that the input member of the reduction gear comprises a pinion (41) and the output member of the reduction gear comprises two gearwheels (33, 35) which are mounted rotatably relative to one another and which are both in engagement with the pinion (41), a first (33) of the two gear wheels of the reduction gear being coupled fixedly in terms of rotation to the centre sleeve (20, 21) or workpiece holder (22), whilst the second gearwheel (35) is mounted on the first gearwheel so as to be rotatable relative to the centre sleeve or workpiece holder and is under the effect of at least one tension spring (51) which exerts a torsional prestressing force and which is arranged in a slot (50) of the first gearwheel (33), the said slot running in the circumferential direction of the latter, and the prestressing torque exerted by the spring or springs (51) being greater than the greatest torque to be transmitted by the rotary drive device.

2. Rotary drive device according to Claim 1, characterized in that the angle of rotation of the rotational movement of the second gearwheel (35) is limited.

3. Rotary drive device according to Claim 1, characterized in that the two gearwheels (33, 35) are provided with anchoring members (52, 53) projecting into the slot (50) and intended for the suspension of a tension spring (51), the anchoring member (52) of one gearwheel (33) being arranged at one end of the slot (50) and the anchoring member (53) of other gearwheel (35) being arranged in the region of the other end of the slot (50).

4. Rotary drive device according to one of Claims 1 to 3, characterized in that four slots (50) distributed uniformly over the circumference and having associated tension springs (51) are provided.

## Revendications

1. Dispositif de commande de rotation pour le fourreau (20, 21) ou le logement de pièce (22) d'une machine à érosion, équipé d'un moteur électrique réversible par rapport au sens de rotation, d'un engrenage réducteur attribué au moteur électrique, qui présente un organe d'entrée coupé au moteur électrique et entraîné par celui-ci ainsi qu'un organe de sortie couplé au fourreau ou au logement de pièce et entraînant celui-ci, équipé d'un générateur de rotation (23) coupé au fourreau ou au logement de pièces et d'un appareil de commande relié au générateur de rotation et au moteur électrique, caractérisé en ce que l'organe d'entrée de l'engrenage réducteur comprend un pignon (41) et l'organe de sortie de l'engrenage réducteur deux roues dentées (33,35) logées de façon mobile l'une par rapport à l'autre, qui sont en prise avec le pignon (41), la première (33) des deux roues dentées de l'engrenage réducteur étant couplée de manière résistante à la torsion avec le fourreau (20, 21) ou le logement de pièce (22), tandis que la deuxième roue dentée (35) est logée sur la première roue dentée de façon pivotante par rapport au fourreau ou au logement de pièce et est soumise à l'effet d'au moins un ressort de traction (51) exerçant une force de prétension sous torsion, qui est disposé dans une fente (50) d'une roue dentée (33), située à la périphérie de celle-ci, et le couple de prétension exercé par le ou les ressort (s) (51) étant supérieur au couple maximum à transmettre par le dispositif de commande de torsion.

2. Dispositif de commande de torsion selon la revendication 1, caractérisé en ce que le mouvement de rotation de la deuxième roue dentée (35) est limitée au niveau de l'angle de torsion.

3. Dispositif de commande de torsion selon la revendication 1, caractérisé en ce que les deux roues dentées (33, 35) sont pourvues d'organes d'ancrage (52, 53) dépassant à l'intérieur de la fente (50) pour l'accrochage d'un ressort de traction (51), l'organe d'ancrage (52) de l'une des roues dentées (33) étant disposé sur une extrémité de la fente (50) et l'organe d'ancrage (53) de l'autre roue dentée (35) dans la zone de l'autre extrémité de la fente (50).

4. Dispositif de commande de torsion selon l'une quelconque des revendications 1 à 3, caractérisé en ce que quatre fentes (50) réparties uniformément à la périphérie sont prévues avec des ressorts de traction (51) affectés.
